# EUROPÄISCHE PATENTANMELDUNG

(11) **EP 0 677 884 A2**
(43) Veröffentlichungstag der Anmeldung: **18.10.1995**
(21) Anmeldenummer: 95103106.1
(22) Anmeldetag: 04.03.1995
(51) Int. Cl.: H01P 1/213

(54) **Frequenzkanal-Multiplexer bzw. Demultiplexer**

(30) Priorität: 31.03.1994 DE 4411233
(71) Anmelder: ROBERT BOSCH GMBH, 70442 Stuttgart (DE)
(72) Erfinder: Friederichs, Lothar, D-71522 Backnang (DE)

(57) **Zusammenfassung**

Eine wenig aufwendige Schaltung, die aus mehreren mehrkanaligen Eingangssignalen beliebige Kanäle selektiert bzw. aus mehreren einzelnen Frequenzkanälen mehrere Ausgangssignale erzeugt, deren Kanal-Zusammensetzung frei wählbar ist, besteht aus mehreren auf die einzelnen Frequenzkanäle abgestimmten Bandpässen (BP1, BP2 ... BPn), deren Ein- bzw. Ausgang jeweils an ein Tor eines von mehreren in Kette geschalteten Zirkulatoren (Z11, Z12 ... Z1n; Z21, Z22 ... Z2n) geschaltet ist. Dabei sind mindestens zwei Zirkulatorketten vorhanden (ZK1, ZK2), und an den Ein- bzw. Ausgang jedes Bandpasses (BP1, BP2 ... BPn) ist wahlweise ein Zirkulator (Z11, Z12 ... Z1n; Z21, Z22 ... Z2n) aus einer der Zirkulatorketten schaltbar.

## Beschreibung

Die vorliegende Erfindung betrifft einen Frequenzkanal-Multiplexer bzw. -Demultiplexer, bestehend aus mehreren, auf die einzelnen Frequenzkanäle abgestimmten Bandpässen, deren Ein- bzw. Ausgang jeweils an ein Tor eines von mehreren in Kette geschalteten Zirkulatoren geschaltet ist.

Eine derartige Anordnung ist aus der DE 32 26 728 A1 bekannt. Es sind hier mehrere Zirkulatorketten vorhanden, wobei jeder Zirkulator einer jeden Zirkulatorkette mit einem eigenen Bandpaßfilter, das auf einen Empfangs- oder Sendekanal abgestimmt ist, beschaltet ist. Auf diese Weise können gleichzeitig Empfangssignale einer Antenne in die einzelnen Empfangskanäle verzweigt und mehrere Sendekanäle in die Antenne eingespeist werden.

Der Erfindung liegt die Aufgabe zugrunde, eine Anordnung der eingangs genannten Art anzugeben, die mit möglichst geringem Schaltungsaufwand in der Lage ist, mindestens zwei Eingangssignale, die mehrere gleiche Freguenzkanäle aufweisen, in einzelne Frequenzkanäle zu demultiplexen, wobei frei wählbar ist, aus welchem der Eingangssignale der jeweilige Frequenzkanal stammt, und umgekehrt aus mehreren einzelnen Frequenzkanälen mindestens zwei Ausgangssignale zu bilden, deren Frequenzkanal-Zusammensetzung wählbar ist.

Erfindungsgemäß wird diese Aufgabe mit den Merkmalen des Anspruchs 1 gelöst. Vorteilhafte Weiterbildungen der Erfindung gehen aus den Unteransprüchen hervor.

Durch den Einsatz von Schaltern, vorzugsweise Transferschaltern, zwischen den Bandpaßfiltern und den Zirkulatorketten kommt man mit einem Minimum an Bandpaßfiltern und Zirkulatoren aus. Eine Reduzierung von Bauteilen und damit von Raum und Gewicht ist besonders relevant, wenn der Frequenzkanal-Multiplexer bzw. - Demultiplexer Teil einer Satellitennutzlast ist.

Anhand zweier in der Zeichnung dargestellter Ausführungsbeispiele wird nun die Erfindung näher erläutert.
Fig. 1 zeigt einen Frequenzkanal-Multiplexer bzw. - Demultiplexer mit zwei Zirkulatorketten und
Fig. 2 zeigt einen Frequenzkanal-Multiplexer bzw. - Demultiplexer mit vier Zirkulatorketten.

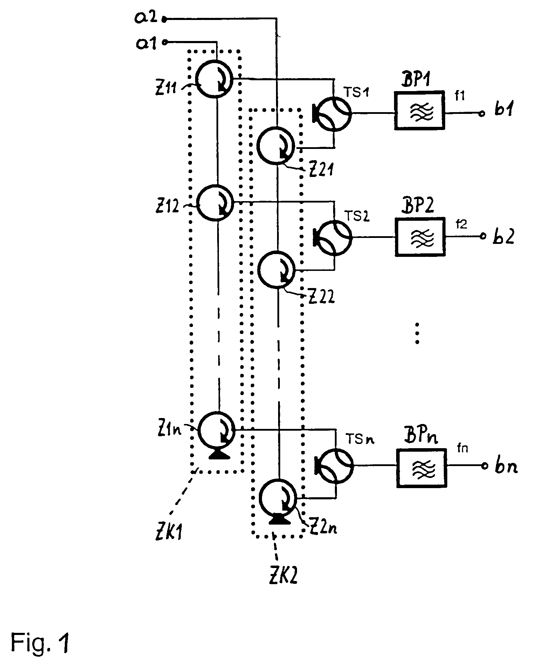

Die in Fig. 1 dargestellte Schaltung soll im folgenden in ihrer Funktion als Demultiplexer beschrieben werden. Bei diesem Ausführungsbeispiel ist die Schaltung für zwei Multiplex-Eingangssignale a1, a2 ausgelegt, die beide zumindest teilweise dieselben Frequenzkanäle mit den Mittenfrequenzen f1, f2 ... fn enthalten. Für jedes Eingangssignal a1, a2 ist eine Zirkulatorkette ZK1, ZK2 vorgesehen. Die beiden Zirkulatorketten ZK1 bzw. ZK2 bestehen aus n in Reihe geschalteten Zirkulatoren Z11, Z12 ... Z1n bzw. Z21, Z22 ... Z2n, wobei n die Zahl der vorkommenden Frequenzkanäle ist. Abweichend vom dargestellten Beispiel kann eine Zirkulatorkette auch weniger Zirkulatoren enthalten als die andere, wenn das zugehörige Eingangssignal weniger Frequenzkanäle enthält als das andere. Für jeden der vorkommenden Frequenzkanäle gibt es ein Bandpaßfilter BP1, BP2 ... BPn, das mittels eines Schalters TS1, TS2 ... TSn - vorzugsweise eines Transferschalters - entweder an die Zirkulatorkette ZK1 des ersten Eingangssignals a1 oder an die Zirkulatorkette ZK2 des zweiten Eingangssignals a2 schaltbar ist. Je nach Schalterstellung kann entweder ein Frequenzkanal aus dem ersten Eingangssignal a1 oder derselbe Frequenzkanal aus dem zweiten Eingangssignal a2 auf das zugehörige Bandpaßfilter geschaltet werden. Weisen beide Eingangssignale z.B. den Frequenzkanal mit der Mittenfrequenz f1 auf, so gelangt bei der in Fig. 1 gezeigten Stellung des Schalters TS1 das Eingangssignal a1 über den Zirkulator Z11 und den Schalter TS1 an den Eingang des Bandpaßfilters BP1. Das zweite Eingangssignal a1 gelangt über den Zirkulator Z21 ebenfalls an den Schalter TS1, wird darin aber vollständig an einem Kurzschluß reflektiert und zum Zirkulator Z21 zurückgeführt, von wo aus er in der Zirkulatorkette ZK2 weitergeleitet wird. Da der zum Bandpaßfilter BF1 gehörende Frequenzkanal des zweiten Eingangssignals a2 an den anderen Bandpaßfiltern BP2 ... BPn reflektiert wird, gelangt er schließlich zu einem reflexionsarmen Abschluß am letzten Zirkulator Z2n der Zirkulatorkette ZK2.

Sollte die in Fig. 1 dargestellte Schaltung als Multiplexer betrieben werden, so ist die Drehrichtung der Zirkulatoren umzukehren. Dann können aus einer Vielzahl von Frequenzkanälen, die an den Eingängen b1, b2 ... bn) der Bandpaßfilter BP1, BP2 ... BPn anliegen, zwei Multiplex-Ausgangssignale a1 und a2 generiert werden, die sich aus beliebig wählbaren Freuenzkanälen zusammensetzen.

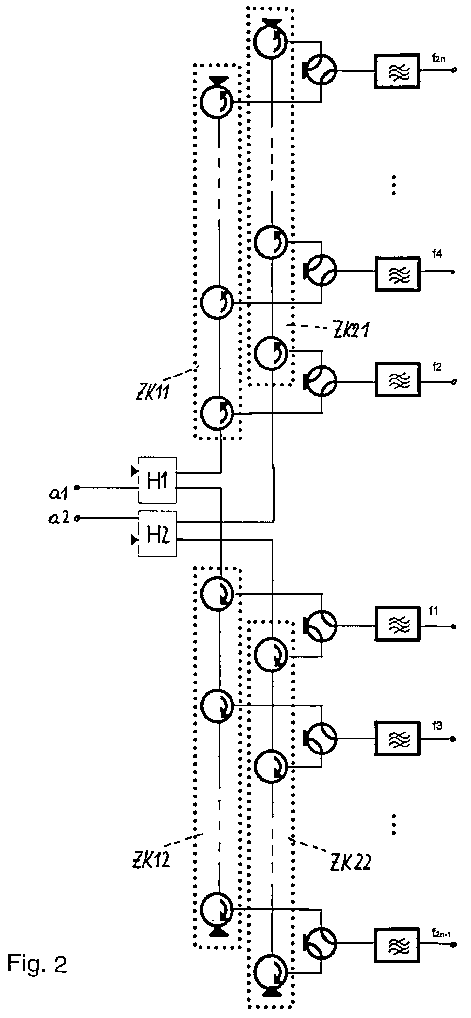

In Fig. 2 sind die zwei Eingangssignale a1, a2 mittels Hybride H1 und H2 (z.B. 3 dB-Koppler) auf zwei Schaltungen gemäß Fig. 1 aufgeteilt. Dabei sind an die erste Gruppe von Zirkulatorketten ZK11, ZK21 Bandpaßfilter für die geradzahligen Frequenzkanäle und an die zweite Gruppe von Zirkulatorketten ZK12, ZK22 Bandpaßfilter für die ungeradzahligen Frequenzkanäle angeschlossen. Somit erreicht man eine bessere Trennung eng benachbarter Frequenzkanäle.

In den Fig. 1 und 2 ist nicht dargestellt, daß den Bandpaßfiltern Gruppenlaufzeitentzerrer, oder Vorrichtungen zum Einstellen bzw. Abgleichen der Einfügungsdämpfung oder der Schräglage der Einfügungsdämpfung oder der Gruppenlaufzeit nachgeschaltet werden können.

## Patentansprüche

1. Frequenzkanal-Multiplexer bzw. -Demultiplexer, bestehend aus mehreren auf die einzelnen Frequenzkanäle abgestimmten Bandpässen, deren Ein- bzw. Ausgang jeweils an ein Tor eines von mehreren in Kette geschalteten Zirkulatoren geschaltet ist, dadurch gekennzeichnet, daß mindestens zwei Zirkulatorketten (ZK1, ZK2) vorhanden sind, und daß an den Ein- bzw. Ausgang jedes Bandpasses (ZK1, ZK2) wahlweise ein Zirkulator (Z11, Z12 ... Z1n; Z21, Z22 ... Z2n) aus einer der Zirkulatorketten (ZK1, ZK2) schaltbar ist.

2. Anordnung nach Anspruch 1, dadurch gekennzeichnet, daß das Ende jeder Zirkulatorkette (ZK1, ZK2) mit einem reflexionsarmen Abschluß beschaltet ist.

3. Anordnung nach Anspruch 1, dadurch gekennzeichnet, daß die wahlweise Anschaltung eines Bandpaßfilters (BP1, BP2 ... BPn) an einen Zirkulator (Z11, Z12 ... Z1n; Z21, Z22 ... Z2n) mittels eines Transferschalters (TS1, TS2 ... TSn) erfolgt.

4. Anordnung nach einem der Ansprüche 1 bis 3, dadurch gekennzeichnet, daß mehrere getrennte Gruppen von Zirkulatorketten (ZK11, ZK21; ZK12, ZK22) vorhanden sind, von denen jede mit Bandpässen für nicht direkt benachbarte Frequenzkanäle beschaltet ist, und daß die Zirkulatorketten (ZK11, ZK21; ZK12, ZK22) aus den einzelnen Gruppen ein- bzw. ausgangsseitig zusammengeschaltet sind.
